# EUROPEAN PATENT APPLICATION

(11) **EP 4 571 448 A1**
(43) Date of publication of application: **18.06.2025**
(21) Application number: 24219920.6
(22) Date of filing: 13.12.2024
(51) Int. Cl.: G05D 1/644, B60W 60/00, G06N 3/08, G05D 101/15, G05D 105/22, G05D 107/13, G05D 109/10

(54) **GENERATING CONTROL INPUTS FOR AGENT TRAJECTORY PLANNING USING NEURAL NETWORKS**

(30) Priority: 14.12.2023 US 202363610365 P
(71) Applicant: Waymo LLC, Mountain View, CA 94043 (US)
(72) Inventor: Wang, Rui, Mountain View, 94043 (US); Liu, Charles Wong, Mountain View, 94043 (US); Kulik, Lukasz, Mountain View, 94043 (US)
(74) Representative: Chettle, John Edward

(57) **Abstract**

Methods, systems, and apparatus, including computer programs encoded on a computer storage medium, for planning the future trajectory of an autonomous vehicle in an environment.

## Description

### BACKGROUND

This specification relates to planning the future trajectory of an autonomous vehicle in an environment.

The environment may be a real-world environment, and the autonomous vehicle can be, e.g., an automobile in the environment.

Autonomous vehicles include self-driving cars, boats, and aircraft. Autonomous vehicles use a variety of on-board sensors and computer systems to detect nearby objects and use such detections to make control and navigation decisions.

### BRIEF DESCRIPTION OF THE DRAWINGS

FIG. 1 is a block diagram of an example system.
FIG. 2 is a flow diagram of an example process for controlling an autonomous vehicle.
FIG. 3 is a block diagram of using a planner neural network to generate a final control trajectory for an autonomous vehicle.
FIG. 4 is a flow diagram of an example process for training the planner neural network.

Like reference numbers and designations in the various drawings indicate like elements.

### DETAILED DESCRIPTION

This specification describes how an autonomous vehicle, e.g., an automobile, can use a trained machine learning model to plan a trajectory for the autonomous vehicle from perception signals, i.e., from outputs generated by a perception system on-board the autonomous vehicle.

Some existing systems attempt to generate planned trajectories for the autonomous vehicle from perception signals using rule-based techniques, i.e., that apply one or more rules to the perception signals and other data, e.g., road graph data and intended route data, to plan the trajectory for the autonomous vehicle. However, the perception signals can be noisy, e.g., due to noise in the sensors of the autonomous vehicles or errors by the learned models that are part of the perception system. Rule-based systems may not be robust to this noise and therefore may not be able to accurately plan the motion of the autonomous vehicle.

Some other systems attempt to generate planned trajectories using learned models that predict (a distribution over) possible future trajectories for the autonomous vehicle, where each trajectory is represented as a sequence of waypoint locations to be traversed by the autonomous vehicles. These types of trajectories will be referred to in this specification as "waypoint trajectories." However, these models may generate trajectories that are not drivable by the autonomous vehicle, e.g., because they violate control limits on the autonomous vehicle or because they violate one or more safety constraints. Moreover, even when a given waypoint trajectory is drivable, in order to be followed by the autonomous vehicle, the trajectory needs to be converted into control inputs for the controller of the autonomous vehicle, requiring significant post-processing.

To address these issues, this specification generates candidate trajectories as control trajectories using a planner neural network, where each control trajectory is a sequence of controls for the controller for the autonomous vehicle. Because the trajectories are in the space of control inputs to the controller, the planner neural network can be trained to ensure that each of the controls in the sequence is within control limits for the autonomous vehicle, therefore ensuring that the trajectories generated by the planner neural network are more likely to be drivable by the autonomous vehicle while remaining robust to noise in the input sensor signals due to the training of the planner neural network. Because of this, the planner system requires fewer post-processing steps in order to generate a final, drivable trajectory from the outputs of the planner neural network and can therefore generate high-quality trajectories with reduced latency.

In some other examples, the planner neural network generates candidate waypoint trajectories rather than predicting candidate control trajectories, and the system uses an optimization algorithm to deduce the corresponding controls for each of the waypoint trajectories. The system can then use optimization to modify the geometry of the candidate control trajectories generated as the output of the optimization and then uses a selection system to select a final trajectory from the modified trajectories or from a set that includes the modified trajectories and the control trajectories.

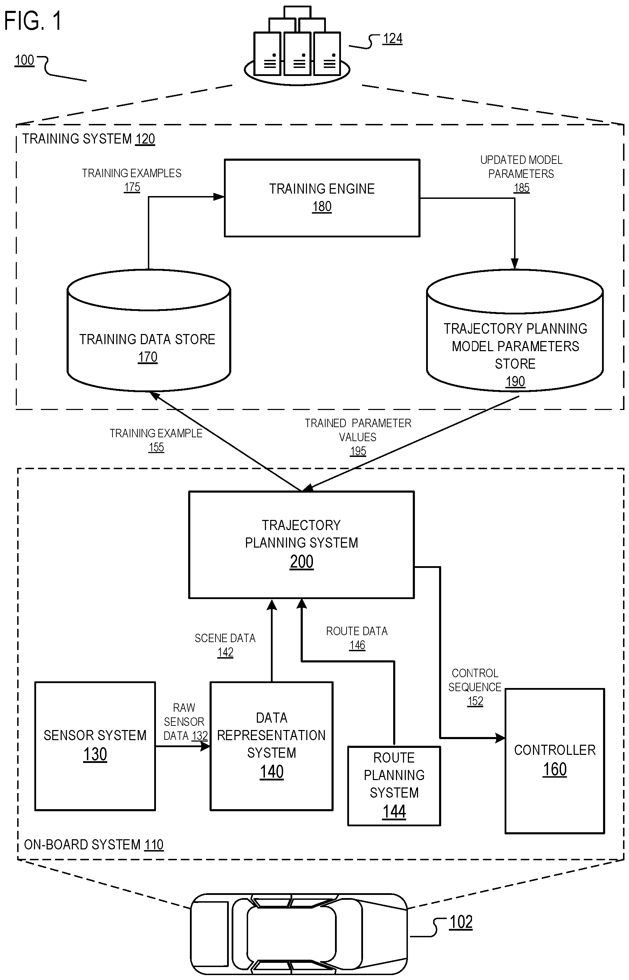

FIG. 1 shows an example system 100. The system 100 is an example of a system implemented as computer programs on one or more computers in one or more locations in which the systems, components, and techniques described below are implemented. The system 100 includes an on-board system 110 and a training system 120.

The on-board system 120 is physically located on-board a vehicle 102. Being on-board the vehicle 102 means that the on-board system 110 includes components that travel along with the vehicle 102, e.g., power supplies, computing hardware, and sensors. In some cases, the vehicle 102 is an autonomous vehicle. An autonomous vehicle can be a fully autonomous vehicle that determines and executes fully-autonomous driving decisions in order to navigate through an environment. An autonomous vehicle can also be a semi-autonomous vehicle that uses predictions to aid a human driver. For example, the vehicle 102 can autonomously apply the brakes if a prediction indicates that a human driver is about to collide with another vehicle. As another example, the vehicle 102can have an advanced driver assistance system (ADAS) that assists a human driver of the vehicle 102 in driving the vehicle 102 by detecting potentially unsafe situations and alerting the human driver or otherwise responding to the unsafe situation. As a particular example, the vehicle 102can alert the driver of the vehicle 102 or take an autonomous driving action when an obstacle is detected, when the vehicle departs from a driving lane, or when an object is detected in a blind spot of the human driver.

The on-board system 110 includes one or more sensor subsystems 130. The sensor subsystems 130 include a combination of components that receive reflections of electromagnetic radiation, e.g., lidar systems that detect reflections of laser light, radar systems that detect reflections of radio waves, and camera systems that detect reflections of visible light.

The sensor data generated by a given sensor generally indicates a distance, a direction, and an intensity of reflected radiation. For example, a sensor can transmit one or more pulses of electromagnetic radiation in a particular direction and can measure the intensity of any reflections as well as the time that the reflection was received. A distance can be computed by determining how long it took between a pulse and its corresponding reflection. The sensor can continually sweep a particular space in angle, azimuth, or both. Sweeping in azimuth, for example, can allow a sensor to detect multiple objects along the same line of sight.

The sensor subsystems 130 or other components of the vehicle 102 can also classify groups of one or more raw sensor measurements from one or more sensors as being measures of another agent. A group of sensor measurements can be represented in any of a variety of ways, depending on the kinds of sensor measurements that are being captured. For example, each group of raw laser sensor measurements can be represented as a three-dimensional point cloud, with each point having an intensity and a position in a particular two-dimensional or three-dimensional coordinate space. In some implementations, the position is represented as a range and elevation pair. Each group of camera sensor measurements can be represented as an image patch, e.g., an RGB image patch.

Once the sensor subsystems 130 classify one or more groups of raw sensor measurements as being measures of respective other agents, the sensor subsystems 130 can compile the raw sensor measurements into a set of raw data 132, and send the raw data 132 to a data representation system 140.

The data representation system 140, also on-board the vehicle 102, receives the raw sensor data 132 from the sensor system 130 and generates scene data 142. The scene data 142 characterizes the current state of the environment surrounding the vehicle 102 as of the current time point.

For example, the scene data can characterize, for one or more agents, e.g., other vehicles, pedestrians, cyclists, etc., in the environment, a current state at the current time point and a previous state at one or more respective previous time points. In other words, the scene data can include, for one or more agents in the environment, data that characterizes a previous trajectory of the agent in the environment up to the current time point. The state of an agent at a time point can include the location of the agent at the time point and, optionally, values for a predetermined set of motion parameters at the time point. As a particular example, the motion parameters can include a heading for the agent, a velocity of the agent, and/or an acceleration of the agent. In another example, one or more agents in the environment can be represented jointly, e.g., by a state describing the position, dimensions, and velocity of the joint representation (e.g., the position, velocity, and horizontal dimensions of a crowd of pedestrians).

In some implementations, the scene data also includes data characterizing a current state of the autonomous vehicle at the current time point and a previous state of the autonomous vehicle at one or more respective previous time points.

In some implementations, the scene data also includes data characterizing features of the environment. These features can include (i) dynamic features of the environment, e.g., traffic light states at the current time point, (ii) static features of the environment, e.g., roadgraph data characterizing one or more of lane connectivity, lane type, stop lines, speed limits, and so on, of roadways in the vicinity of the autonomous vehicle or (iii) both. In one example, the dynamic features of the environment can be represented by a combination of polylines (e.g., for the position of the feature) and one-hot encoding vectors (e.g., one-hot encodings for the red-yellow-green lights of a traffic light, with polylines representing the position in the environment). The static features of the environment can be represented by polylines. For features represented by polylines, the features can be converted to feature vectors (e.g., represented by x, y points with vector directions in the environment, such as numerical values representing x, y positions and a heading) prior to the system using them.

The data representation system 140 provides the scene data 142 to a trajectory planning system 200, also on-board the vehicle 102.

Additionally, a route planning system 144 provides route data 146 to the trajectory planning system 200.

The route data 146 is an output generated by the route planning system 144 that characterizes how the autonomous vehicle should navigate in a future time window in order to follow a designated route.

The route data 146 reflects a determination by the planning system 144 that the autonomous vehicle should follow a route characterized by the route data 146 in order to satisfy certain criteria.

The route characterized by the route data 146 can be, e.g., a high level intended route for the autonomous agent embedded in the roadgraph for the environment with no notion of time.

The certain criteria can include, e.g., a set of one or more traffic laws (e.g., speed limit, right of way, lane traversal, etc.), a set of one or more safety regulations (e.g., minimum following distances, adjustments to speed given weather conditions, etc.), and a set of one or more goal criteria (e.g., an intended destination, minimum deviation from a template path when confronted with dynamic road conditions, etc.).

The route data 146 can be represented by, e.g., an ordered set of points with vector directions for the intended route (e.g., x, y positions with vector directions). Each point can represent a waypoint spatial location in a sequence of waypoint spatial locations for the autonomous vehicle to follow to reach an intended destination, e.g., a sequence of evenly-spaced waypoint spatial locations that are each constrained to fall on a feature that is present in the roadgraph, e.g., to fall on a path that is represented in the roadgraph, e.g., a path that traverses the center of any given driving lane.

The trajectory planning system 200 processes the scene data 142 and the route data 146 to generate a final control trajectory 152 (also referred to as a control "sequence"). The final control trajectory 152 characterizes the future trajectory of the autonomous vehicle after the current time point.

The trajectory planning system 200 then provides the final control trajectory 152 to a controller 160 of the autonomous vehicle 102.

The controller 160 is hardware or software or a combination of hardware and software on-board the autonomous vehicle 102 that controls the autonomous vehicle 102. That is, the controller 160 submits inputs to the various control systems of the autonomous vehicle 103, e.g., the braking system, the steering system, the throttle system, and so on, in order to control the movement of the autonomous vehicle 102 in the environment.

Thus, the final control trajectory 152 is a sequence of controls for the controller 160, i.e., a sequence that includes a respective control for the controller 160 at each of multiple future time points after the current time point.

The respective controls at a given time point include one or more control inputs for the controller 160 that the controller 160 can translate into inputs for the control systems of the autonomous vehicle 102.

In particular, the respective controls at a given time point specify a change to the motion of the autonomous vehicle 102 as of the time point. The controller 160 can then translate these controls into the inputs to the various control systems of the vehicle 102 that would result in the specified change in the motion of the vehicle 102.

For example, the respective controls at a given time point can include a first control input that specifies a change in the heading of the autonomous vehicle as of the future time point. For example, this first control input can be equal to the first, second, or third derivative of the vehicle heading.

As another example, the respective controls at a given time point can include a second control input that specifies a change in a longitudinal displacement of the autonomous vehicle as of the future time point. For example, this first control input can be equal to the first, second, or third derivative of the longitudinal displacement.

Once the controller 160 receives the final control trajectory 152, the controller 160 can then control the vehicle 102 using the final control trajectory 152. For example, the controller 106 can translate the respective controls in the sequence into control inputs to the control system and submit those control inputs to the control systems at the corresponding time points until a new control trajectory is received or until a signal is received from another component of the on-board system 110 that indicates that the controller 160 should stop controlling the vehicle 102 using the control trajectory 152.

To generate the control trajectory 152, the system 200 uses a planner neural network.

The planner neural network is a neural network that is configured to process the route data 146 and the scene data 142 to generate, as output, a plurality of candidate control trajectories. Like the final control trajectory 152, each candidate control trajectory includes respective controls for a controller for the autonomous vehicle at each of a plurality of future time points that are after the current time point. That is, the planner neural network is a neural network that generates candidate trajectories that include controller controls rather than future waypoints.

The system 200 then generates the final trajectory 152 using the candidate trajectories generated by the planner neural network.

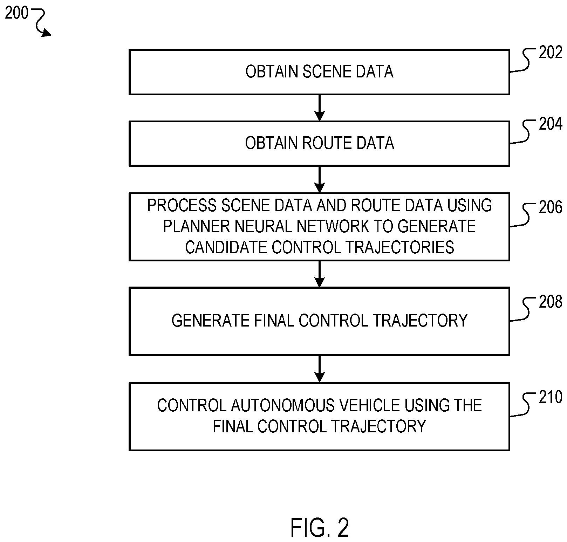

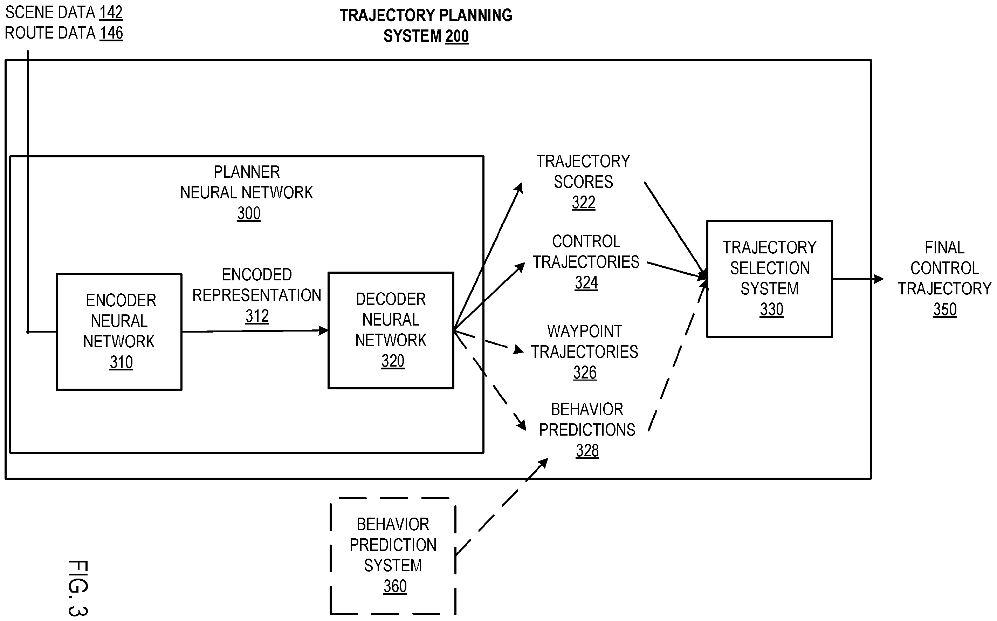

The planner neural network and generating the final trajectory 152 are described in more detail below with reference to FIGS. 2 and 3.

In some implementations, the on-board system 110 uses the control system 200 to control the vehicle throughout the operation of the vehicle 102 in the environment. In some other implementations, the on-board system 110 uses the control system 200 to control the vehicle only in certain driving scenarios and, in other driving scenarios, uses other on-board system to generate the inputs to the controller 160. As a particular example, the on-board system 110 can use the control system 200 for freeway or highway driving scenarios while using different control systems for navigating surface streets. As another particular example, the on-board system 110 can use the control system 200 for night-time driving scenarios while using different control systems for daytime driving scenarios.

To generate the trajectory 152, the trajectory planning system 200 can use trained parameter values 195, i.e., trained model parameter values of the planner neural network, obtained from a trajectory planning model parameters store 190 in a training system 120.

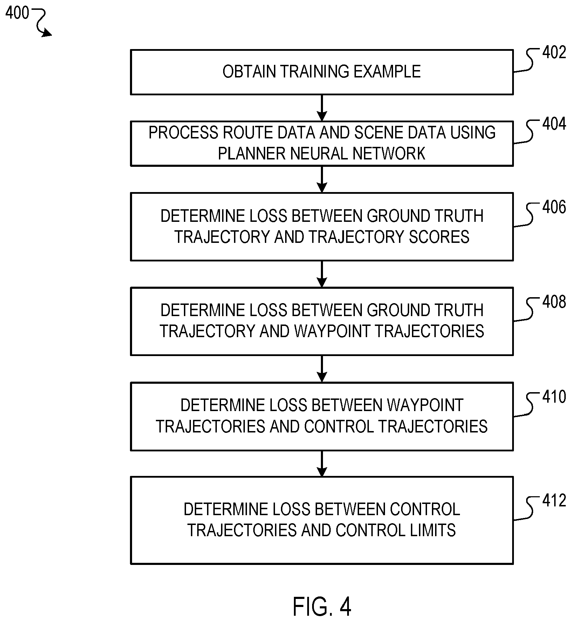

The training system 120 can train the planner neural network using any of a variety of imitation learning techniques, e.g., using a behavior cloning technique, an adversarial imitation learning technique, or a DAgger (data aggregation) imitation learning technique from driving logs generated by other autonomous vehicles or manually driven vehicles. One example technique for training the planner neural network is described below with reference to FIG. 4.

The training system 120 is typically hosted within a data center 124, which can be a distributed computing system having hundreds or thousands of computers in one or more locations.

The training system 120 includes a training data store 170 that stores all the training data used to train the trajectory planning system i.e., to determine the trained parameter values 195 of the trajectory planning system 200. The training data store 170 receives raw training examples from agents operating in the real world. For example, the training data store 170 can receive a raw training example 155 from an agent, e.g., a manually driven vehicle or autonomous vehicle controlled using a different planning system. The raw training example 155 can be processed by the training system 120 to generate a new training example. The raw training example 155 can include scene data and route data, e.g., like the scene data 142 and route data 146, that can be used as input for a new training example. The raw training example 155 can also include outcome data characterizing the state of the environment surrounding the autonomous vehicle 102 at the one or more future time points. This outcome data can be used to generate a ground truth trajectory for the autonomous vehicle at the time point characterized by the scene data. The ground truth trajectory identifies the actual trajectory (as derived from the outcome data) traversed by the autonomous vehicle 102 at the future time points. For example, the ground truth trajectory can identify spatial locations in an autonomous vehicle-centric coordinate system to which the autonomous vehicle moved at each of multiple future time points. In some cases, during training, only future trajectories that include vehicle states (i.e., waypoint locations) rather than controls for the controller 160, are available to the system 120. That is, the system 120 may only have access to ground truth waypoint trajectories rather than ground truth control trajectories.

The training data store 170 provides training examples 175 to a training engine 180, also hosted in the training system 120. The training engine 180 uses the training examples 175 to update model parameters that will be used by the trajectory planning system 200, and provides the updated model parameters 185 to the trajectory planning model parameters store 190. Once the parameter values of the trajectory planning system 200 have been fully trained, the training system 120 can send the trained parameter values 195 to the trajectory planning system 200, e.g., through a wired or wireless connection.

FIG. 2 is a flow diagram of an example process 200 for controlling an autonomous vehicle. For convenience, the process 200 will be described as being performed by a system of one or more computers located in one or more locations. For example, a trajectory planning system, e.g., the trajectory planning system 200 of FIG. 1, appropriately programmed in accordance with this specification, can perform the process 200.

The system obtains scene data characterizing a scene in an environment that includes, at a current time point, an autonomous vehicle and one or more agents (step 202). For example, the system can obtain the scene data from sensor measurements of one or more sensors of the autonomous vehicle and, optionally, from other sources, e.g., from a road graph of the environment.

The system receives route data specifying an intended route for the autonomous vehicle after the current time point (step 204). As described above, the route data can include data characterizing an intended route for the autonomous vehicle after the current time point. For example, route data characterizing the intended route of the autonomous vehicle can be represented by an ordered series of positions along the route.

The system processes the route data and the scene data using a planner neural network to generate a plurality of candidate control trajectories (step 204). Generally, each candidate control trajectory comprises respective controls for a controller for the autonomous vehicle at each of a plurality of future time points that are after the current time point. For example, as described above, the respective controls at a given future time point can include (i) a first control input that specifies a change in a heading of the autonomous vehicle as of the future time point, (ii) a second control input that specifies a change in a longitudinal displacement of the autonomous vehicle as of the future time point, or (iii) both.

The system generates, using the candidate control trajectories, a final control trajectory (step 206).

The system can generate the final control trajectory using the candidate trajectories in any of a variety of ways.

Some examples of generating the final control trajectory are described in more detail below.

The system controls the autonomous vehicle using the final control trajectory (step 208). That is, the system can provide the final control trajectory to the controller for the autonomous vehicle, which can translate the controls into control inputs for the control systems of the autonomous vehicles and then apply the control inputs to cause the autonomous vehicle to move in the environment.

FIG. 3 shows the operation of the trajectory planning system 200.

As described above, the trajectory planning system 200 processes scene data 142 and route data 146 to generate a trajectory planning output 152 that characterizes the scene data 142 and route data 146.

The scene data can include multiple types of scene data characterizing a scene in an environment that includes an autonomous vehicle and one or more agents, e.g., agent state data characterizing respective states of one or more agents as of the current time point, autonomous vehicle data characterizing a state of the autonomous vehicle as of the current time point, static state data characterizing static features of the scene, dynamic state data characterizing dynamic features of the scene, or any combination thereof.

Specific examples of types of scene data that can be received as input by the system 200 now follow.

For example, the scene data can include one or more of: roadgraph polylines characterizing multiple classes of static objects in the environment (e.g., feature vectors including x, y points with vector directions representing the polylines that characterize the multiple classes of static objects), traffic light state characterizing the state of traffic lights in the environment (e.g., represented by a history of one-hot encodings of the red-yellow-green state of the traffic light at each of multiple previous time points before the current time point), av (autonomous vehicle) state characterizing a state of the autonomous vehicle in the environment (e.g., represented by a history of numerical values representing the position, velocity, and acceleration of the autonomous vehicle at each of multiple previous time points before the current time point), and agent state characterizing the state of one or more other agents in the environment (e.g., represented by a respective history of numerical values for each of the one of more agents representing the position, velocity, and acceleration of the agent at each of multiple previous time points before the current time point).

The route data can include, e.g., an intended route characterizing an intended route for the autonomous vehicle (e.g., represented by a set of ordered numerical values, such as a vector or matrix of numerical values). The intended route can be a series of waypoints in the environment (e.g., x, y positions with vector directions embedded in the roadgraph with no notion of time). In contrast, the trajectory planning output generated by the trajectory planning system 200 include control inputs to the controller 160 and can be at the resolution as the intended route or at a higher resolution.

The system 200 includes a planner neural network 300 that processes the scene data 142 and the route data 146 to generate a planner output that includes candidate control trajectories 324.

The planner neural network 300 can generally have any appropriate neural network architecture that allows the planner neural network 300 to map the scene data 142 and the route data 146 to the planner output.

Generally, however, the planner neural network 300 will include an encoder neural network 310 that generates an encoded representation 312 of the scene data 142 and the route data 146 and a decoder neural network 320 that processes the encoded representation 312 to generate the planner output. The encoded representation 312 can be, for example, a single tensor, e.g., a vector, matrix, or higher-dimensional tensor, or can be a sequence of tensors, e.g., a sequence of vectors.

The encoder neural network 310 can have any appropriate architecture that allows the encoder neural network 310 to map the scene data 142 and the route data 146 to the encoded representation. For example, the encoder neural network 310 can include any of: convolutional layers, fully-connected layers, recurrent layers, Transformer layers, multi-context gating layers, and so on.

As one example, the encoder neural network 310 can include (i) a respective encoder for each of multiple different types of scene data and for the route data and (ii) a combining neural network that maps the outputs of the respective encoders to the alternative representation. An example of such an architecture is described in more detail in AGENT TRAJECTORY PLANNING USING NEURAL NETWORKS, US Patent Application 17/396,554, filed on 8/6/2021, the contents of which are hereby incorporated herein in their entirety.

The decoder neural network 320 can have any appropriate architecture that allows the decoder neural network 320 to map the encoded representation to the planner output. For example, the encoder neural network 310 can include any of: convolutional layers, fully-connected layers, recurrent layers, Transformer layers, multi-context gating layers, and so on.

As one example, the decoder neural network 320 can receive as input a set of learned query vectors and process the query vectors through a sequence of neural network layers, at least some of which are conditioned on the alternative representation. For example, the sequence of layers can include any of self-attention layers, cross-attention layers that are conditioned on the encoded representation, multi-context gating layers that are conditioned on the encoded representation, and so on. The decoder neural network 320 can then generate the planner output from the updated query vectors after having been processed through the sequence of neural network layers. An example of such an architecture is described in more detail in AGENT TRAJECTORY PLANNING USING NEURAL NETWORKS, US Patent Application 17/396,554, filed on 8/6/2021, the contents of which are hereby incorporated herein in their entirety.

As shown in FIG. 3, the planner output includes both trajectory scores 322 and the candidate trajectories 326. In particular, the planner output includes a respective trajectory score and regression output for each candidate trajectory. For example, the trajectory scores and regression outputs can collectively define a Gaussian mixture model over the space of control trajectories.

In particular, the trajectory score for a given candidate trajectory represents a predicted likelihood that the candidate trajectory is closest to a trajectory that would result in the autonomous vehicle successfully navigating the intended route after the current time point. Each trajectory score can be represented by, e.g., a numerical value.

In some implementations, the candidate trajectories 324 can include not only the respective controls at each of the time points, but also respective uncertainties for each of the controls, e.g., a prediction of the variance or standard deviation of the respective controls.

During training of the planner neural network 300, the planner output can also include a respective waypoint trajectory 326 corresponding to each candidate trajectory. The respective waypoint trajectories can include respective waypoint locations and, optionally additional information, for each of the future time points. That is, the waypoint trajectories 326 are used to improve the training of the planner neural network 300. After training, the portion of the planner neural network 300 that generates the waypoint trajectories can be discarded. One example technique for using waypoint trajectories during the training of the planner neural network 300 is described below with reference to FIG. 4.

As shown in FIG. 3, the planner system 200 also includes a trajectory selection system 330 that receives the candidate control trajectories 324 and the trajectory scores 322 and generates the final control trajectory 350. In some implementations, the candidate trajectories that are received by the trajectory selection system 300 are not all of the candidates that are generated by the planner neural network 300. For example, the system 200 can select only the k highest scoring candidates according to the trajectory scores 322 and provide only the selected candidate trajectories to the trajectory selection system 330.

In some implementations, the trajectory selection system 330 can also receive as input behavior predictions 328 for other agents in the environment. For example, the behavior predictions 328 can include a respective behavior prediction for each agent within range of the sensors of the autonomous vehicle or for a subset of the agents that have been identified by another system on-board the autonomous vehicle.

The behavior prediction 328 for a given other agent includes a set of one or more predicted future trajectories for the other agent, where each predicted future trajectory includes a respective waypoint location for the other agent at each of the future time points.

In some implementations, the behavior predictions 328 are generated as part of the planner output by the planner neural network 300. For example, the planner neural network 300 can include a separate decoder (not shown), that receives as input the encoded representation and that processes the encoded representation to generate, as output, the behavior predictions 328.

In some other implementations, the behavior predictions 328 are generated by a separate behavior prediction system 360, e.g., based on the scene data 142 or other data derived from sensor measurements, on-board the autonomous vehicle 102.

The trajectory selection system 300 can use the described inputs to generate a final control trajectory 350 in any of a variety of ways.

For example, the trajectory selection system 300 can select one of the plurality of candidate control trajectories and then generate the final control trajectory from the selected candidate control trajectory.

As a particular example, the trajectory selection system 300 can select the candidate control trajectory based on the respective likelihood scores for the candidate control trajectories and on a set of driving criteria for the movement of the autonomous vehicle.

As one example, the system can re-rank the candidate control trajectories based on the likelihood scores and the set of driving criteria and then select the highest-ranked trajectory.

For example, the system can remove, from the ranking, any candidate control trajectory that violates any of the criteria.

The criteria can include any of a variety of criteria for the operation of the autonomous vehicle.

For example, criteria can include any of: deviating from the drivable area of the roadway, exceeding the speed limit on the road way or otherwise violating traffic laws, or other constraints on the safe operation of the vehicle.

As another example, one or more of the criteria can be based on the behavior predictions 328. As a particular example, a given candidate trajectory can violate the criteria if it passes within a threshold distance of any trajectory prediction for any agent as reflected in the behavior predictions 328.

Once the system selects the candidate control trajectory, the system can optionally post-process the candidate control trajectory by adjusting the geometry of the candidate control trajectory to generate an adjusted control trajectory and then use the adjusted control trajectory as the final trajectory. For example, when the intended route specifies that the vehicle should stay in the current driving lane, the system can adjust the geometry of the candidate control trajectory to minimize deviation from the center of the driving lane. If the intended route specifies that the vehicle should move out of the current driving lane, e.g., make a turn or a lane change, the system can refrain from modifying the geometry.

As another example, the system can first post-process each candidate control trajectory by adjusting a geometry of the candidate control trajectory to generate an adjusted control trajectory, and then apply the set of driving criteria to the adjusted control trajectories as described above. In some cases, the system can apply the set of driving criteria to a set that includes both the adjusted control trajectories and the candidate control trajectories (rather than only the adjusted trajectories).

In some cases, e.g., if none of the candidates satisfy the driving criteria, the system can generate a default control trajectory and use the default control trajectory as the final trajectory 152. For example, the default control trajectory can be one that slows the displacement of the vehicle faster than any of the candidate trajectories.

As indicated above, in some other examples, the planner neural network 300 generates the candidate waypoint trajectories 326 and does not predict the candidate control trajectories 324. In these examples, the system 200 uses an optimization algorithm to deduce the corresponding controls for each of the waypoint trajectories. In particular, the system 200 can use any appropriate optimization algorithm to identify, for a given sequence of waypoint locations, the sequence of control inputs that results in the vehicle most closely navigating to each of the waypoint locations at the corresponding time. The system 200 can then modify the geometry of the candidate control trajectories generated as the output of the optimization as described above. The trajectory selection system 330 can then select a final trajectory 350 from the modified trajectories or from a set that includes both the modified trajectories and the control trajectories.

In some examples, the system 200 uses the version of the planner neural network 300 that generates control trajectories in some driving scenarios, e.g., freeway or highway driving, while using the version of the planner neural network 300 that generates waypoint trajectories in other driving scenarios, e.g., navigating surface streets.

FIG. 4 is a flow diagram of an example process 400 for training the planner neural network. For convenience, the process 400 will be described as being performed by a system of one or more computers located in one or more locations. For example, a training system, e.g., the training system 120 of FIG. 2, appropriately programmed in accordance with this specification, can perform the process 400.

The system can repeatedly perform the process 400 on different batches of one or more training examples in order to train the planner neural network.

In particular, the system can perform steps 402-412 for each training example in the current batch of training examples.

The system obtains a training example (step 402). The training example will generally include scene data, intended route data, and a ground truth future trajectory. For example, the training example can have been extracted from logs of human-operated vehicles or other autonomous vehicles. Generally the ground truth future trajectory includes respective waypoint locations at each of multiple future time steps after the current time point in the training example.

The system processes the scene data and route data using the planner neural network to generate a planner output that includes trajectory scores, waypoint trajectories, and control trajectories (step 404). As described above, the waypoint trajectories and the control trajectories can optionally include respective uncertainties for each of the future time steps.

The system determines a loss between the ground truth trajectory and the trajectory sores (step 406). For example, this loss can measure the negative log of the likelihood score for the waypoint trajectory that is closest to the ground truth trajectory in the training example.

The system determines a loss between the ground truth trajectory and the waypoint trajectories (step 408). For example, this loss can measure the negative log of the likelihood assigned to the ground truth trajectory by the probability distribution defined by the uncertainties in the waypoint trajectory that is closest to the ground truth trajectory.

The system determines a loss between the waypoint trajectories and the control trajectories (step 410). For example, the system can integrate each control trajectory to generate a corresponding integrated waypoint trajectory and then compute the loss based on, for each control trajectory, a difference between the integrated control trajectory generated from the control trajectory and the corresponding waypoint trajectory. For example, the difference can be a distance between the two trajectories or can be, e.g., the negative log of the likelihood assigned to the integrated control trajectory by the probability distribution defined by the uncertainties in the corresponding waypoint trajectory.

The system determines a loss between the control trajectories and a set of control limits for the autonomous vehicle (step 412). Generally, for a given control trajectory, this loss penalizes the planner neural network if any of the respective controls in the control trajectory are outside of the control limits for the autonomous vehicle. For example, the set of control limits can impose constraints on each of a set of kinematics values, e.g., a set that includes one or more acceleration, curvature, lateral acceleration, and changes in or derivatives of any of the above. The set of constraints for a given kinematics value can include respective constraints for different contexts, e.g., different velocities, accelerations, and so on. The loss can include a respective term for each constraint that imposes a penalty, e.g., an L2 penalty or other penalty, for the control inputs at a given time point resulting in the corresponding kinematic value violating the constraint only if the context for the constraint is satisfied.

The system then trains the neural network using the respective losses for each of the training examples. For example, the system can compute an overall loss that is an average of, for each training example, an average of a weighted sum of the respective losses for the training example and then compute gradients with respect to the network parameters of the planner neural network of the overall loss, e.g., through backpropagation. The system can then apply an optimizer to these gradients to update the network parameters.

When the planner neural network also generates behavior predictions, each training example will also generally include ground truth trajectories for other agents in the environment. The respective losses for each training example can then also include a respective behavior prediction loss for each of the other agents.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method comprising:
obtaining, by an autonomous vehicle, scene data characterizing a scene in an environment at a current time point;
receiving route data specifying an intended route through the environment for the autonomous vehicle after the current time point;
processing the route data and the scene data using a planner neural network to generate a plurality of candidate control trajectories, wherein each candidate control trajectory comprises respective controls for a controller for the autonomous vehicle at each of a plurality of future time points that are after the current time point;
generating, using the candidate control trajectories, a final control trajectory; and
controlling the autonomous vehicle using the final control trajectory.

2. The method of claim 1, wherein the respective controls at each future time point comprise:
a first control input that specifies a change in a heading of the autonomous vehicle as of the future time point.

3. The method of any preceding claim, wherein the respective controls at each future time point comprise:
a second control input that specifies a change in a longitudinal displacement of the autonomous vehicle as of the future time point.

4. The method of any preceding claim, wherein generating, using the candidate control trajectories, a final control trajectory comprises:
selecting one of the plurality of candidate control trajectories; and
generating the final control trajectory from the selected candidate control trajectory.

5. The method of claim 4, wherein the planner neural network generates a respective likelihood score for each of the candidate control trajectories, and wherein selecting one of the plurality of candidate control trajectories comprises:
selecting the candidate control trajectory based on the respective likelihood scores for the candidate control trajectories and on a set of driving criteria.

6. The method of claim 5, further comprising:
obtaining respective trajectory predictions for each of one or more agents in the environment at the current time point, wherein one or more of the set of driving criteria include one or more criteria that, for each candidate control trajectory, compare a trajectory of the autonomous vehicle defined by the candidate control trajectory to the trajectory predictions for the one or more agents.

7. The method of claim 6, wherein the planner neural network generates the respective trajectory predictions for each of the one or more agents.

8. The method of claim 6, wherein obtaining respective trajectory predictions for each of the one or more agents comprises obtaining the respective trajectory predictions from a behavior prediction system.

9. The method of any one of claims 5-8, wherein selecting the candidate control trajectory based on the respective likelihood scores for the candidate control trajectories and on a set of driving criteria comprises:
post-processing each candidate control trajectory by adjusting a geometry of the candidate control trajectory to generate an adjusted control trajectory; and
applying the set of driving criteria to the adjusted control trajectories.

10. The method of any one of claims 4-9, wherein generating the final control trajectory from the selected candidate control trajectory comprises:
post-processing the selected candidate control trajectory by adjusting a geometry of the selected candidate control trajectory to generate an adjusted control trajectory; and
selecting, as the final control trajectory, the adjusted control trajectory.

11. The method of any preceding claim, wherein generating, using the candidate control trajectories, a final control trajectory:
determining that none of the candidate controls sequences satisfy a set of driving criteria; and
in response, generating a default control trajectory; and
selecting the default control trajectory as the final control trajectory.

12. A system comprising one or more computers and one or more storage devices storing instructions that when executed by the one or more computers cause the one or more computers to perform the respective operations of any preceding claim.

13. One or more non-transitory computer-readable media storing instructions that when executed by one or more computers cause the one or more computers to perform the respective operations of any one of claims 1-11.
